Europäisches Patentamt

European Patent Office

Office européen des brevets

(19)

(11) Publication number: **0 051 918**
**B1**

# (12) EUROPEAN PATENT SPECIFICATION

(45) Date of publication of patent specification: **26.02.86**

(51) Int. Cl.⁴: **F 16 H 11/00**

(21) Application number: **81304427.8**

(22) Date of filing: **25.09.81**

(54) **Variable-ratio drive mechanisms.**

(30) Priority: **07.11.80 US 204955**

(43) Date of publication of application:
**19.05.82 Bulletin 82/20**

(45) Publication of the grant of the patent:
**26.02.86 Bulletin 86/09**

(84) Designated Contracting States:
**DE FR GB IT NL**

(56) References cited:
**DE-B-1 141 502**
**US-A-2 087 642**
**US-A-3 380 315**
**US-A-3 893 344**

(73) Proprietor: **GENERAL MOTORS CORPORATION**
**General Motors Building 3044 West Grand**
**Boulevard**
**Detroit Michigan 48202 (US)**

(72) Inventor: **Sherman, James Francis**
**7978 Whitmore Lake Road**
**Brighton Michigan 48116 (US)**
Inventor: **Vukovich, William Joseph**
**5280 Crane Road**
**Ypsilanti Michigan 48197 (US)**

(74) Representative: **Breakwell, John Neil Bower**
**et al**
**GM Patent Section Luton Office (F6) P.O. Box**
**No. 3 Kimpton Road**
**Luton Beds. LU2 OSY (GB)**

Courier Press, Leamington Spa, England.

## Description

This invention relates to a variable-ratio drive mechanism as specified in the preamble of claim 1, for example as disclosed in DE—B—1 141 502.

It has generally been the practice in pulley-type variable-ratio drive mechanisms, as is the case in the said DE—B—1 141 502, to control the pulley position by means of variable hydraulic pressure which is established by various drive parameters, and thereby provides a drive ratio that is proportional to the hydraulic control pressure. This can result in a relatively complex control arrangement, requiring a rather large amount of space to accommodate it.

The present invention is concerned with achieving a more compact arrangement.

To this end, a variable-ratio drive mechanism in accordance with the present invention is characterised by the feature specified in the characterising portion of claim 1.

This location for the control lever, in the context of the movable pivot for the control lever and the direct connection of the control lever between input and output elements, provides a more compact arrangement, utilizing the otherwise void space between the driving and driven pulleys (sheaves) encompassed by the drive belt.

Ratio control of the other pulley can be effected by means of a control pressure, for example system pressure derived from an engine-driven positive-displacement pump and an associated control system.

In the said mechanism the control actuator is operable on one end of the control lever to control the position thereof in response to the desired drive ratio. Movement of this end of the control lever results in pivoting about the other end, to produce linear movement of an actuator rod or like linkage actuating a valve spool (for example) of the fluid control valve. The movement of the valve spool results in a change in the operating pressure level so that the pulley is moved linearly to effect a change in the drive ratio. Movement of the pulley results in pivoting of the control lever about the one end thereof so that the actuator rod is again moved linearly, in a direction opposite to the previous movement, until the valve spool returns to its neutral location after the desired drive ratio has been obtained. Thus, a follow-up action is obtained.

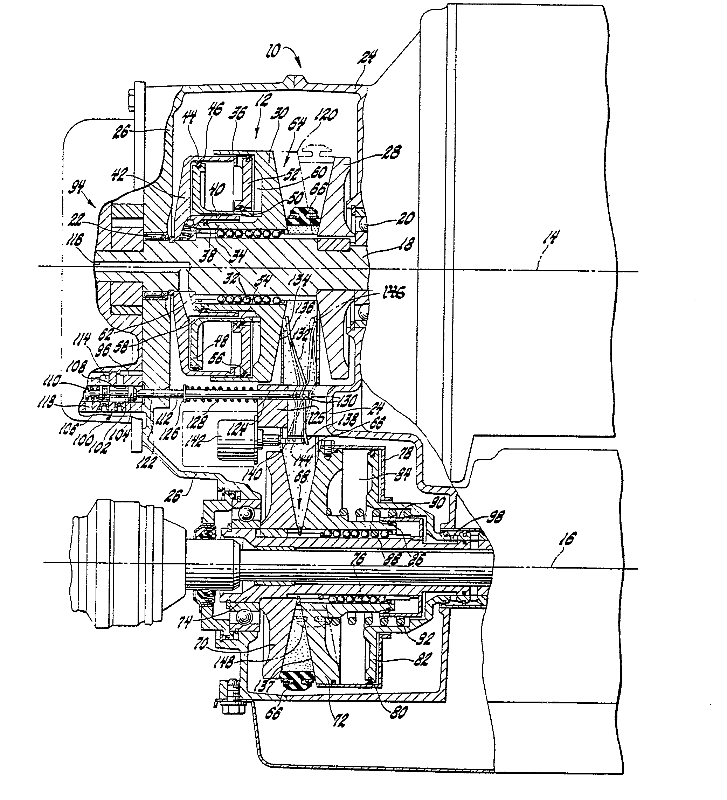

The single Figure of the drawing is a fragmentary longitudinal section, with parts in elevation, showing one embodiment of a variable-ratio drive mechanism in accordance with the present invention.

In the drawing, there is shown a motor vehicle transmission, generally designated 10, which incorporates one embodiment of a variable-ratio drive mechanism, generally designated 12, in accordance with the present invention. The transmission 10 has an input axis 14 which is substantially coaxial with an engine crankshaft, not shown, and also has an output axis 16 which is substantially coaxial with a pair of vehicle drive axles, not shown.

An input shaft 18 is rotatably supported in bearings 20 and 22 disposed in transmission housings 24 and 26, respectively. The input shaft 18 is coaxial with the input axis 14, and has drivingly connected thereto a pair of pulley halves (discs) 28 and 30. The pulley half 28 is maintained stationary in an axial (longitudinal) direction relative to the input shaft 18, whereas the pulley half 30 is permitted to move axially (longitudinally) relative to the input shaft 18. Both pulley halves 28 and 30 rotate in unison with the input shaft 18, which is adapted to be driven either directly by the engine crankshaft or through an intervening friction clutch or fluid drive mechanism, not shown. Any of the well-known friction-clutch mechanisms, either manually or automatically engaged, or fluid drive mechanisms can be utilized.

The axially movable pulley half 30 is drivingly connected to a ball spline 32, and has formed integrally therewith an inner hub 34 and an outer hub 36. The inner hub 34 carries a seal member 38 which sealingly engages an inner cylinder portion 40 formed integrally with a cylinder housing 42. The cylinder housing 42 also includes an outer portion 44 which is sealingly engaged by a lip seal 46 secured in a longitudinally movable piston member 48. The piston member 48 has a hollow cylindrical portion 50 which abuts the pulley half 30.

An annular dividing member 52 has fixed thereto a pair of lip seals 54 and 56 which sealingly engage the cylindrical portion 50 and outer hub 36 respectively. The dividing member 52 abuts the outer cylinder portion 44, and is secured on the input shaft 18 in a manner preventing longitudinal movement thereon. The piston member 48 and the cylinder housing 42 cooperate to form a pressure chamber 58, and the dividing member 52 and the axially movable pulley half 30 cooperate to form a pressure chamber 60. The piston member 48 and the axially movable pulley half 30 are operable to move in unison longitudinally relative to the input shaft 18 in response to fluid pressure within the chambers 58 and 60. These chambers 58 and 60 are interconnected by means of a fluid passage 62 and the space between the inner cylinder portion 40 and the hollow cylindrical portion 50.

The pulley halves 28 and 30 cooperate to form a drive pulley (sheave) generally designated 64, which is operatively connected to drive belt 66. The drive belt 66 is also connected to a driven pulley (sheave) generally designated 68, having belt-receiving discs comprising an axially (longitudinally) stationary pulley half 70 and an axially (longitudinally) movable pulley half 72. The axially stationary pulley half 70 is drivingly connected directly to a sleeve shaft 74, and the axially movable pulley half 72 is drivingly connected by way of a ball spline 76 to the sleeve shaft 74. The sleeve shaft 74 is adapted to be connected to a planetary gearing mechanism (not shown) such as that disclosed in our European Patent application 81302025.2.

The said patent application also discloses a variable-ratio pulley mechanism which can incorporate the drive mechanism described herein.

The axially movable pulley half 72 has secured thereto a housing 78 which is sealingly engaged by a lip seal 80 disposed in a stationary wall 82. The stationary wall 82 cooperates with the housing 78 and the axially movable pulley half 72 to form a pressure chamber 84. The radially inner portion of the pressure chamber 84 is sealed by a lip seal 86 which is disposed in a hub 88 on the axially movable pulley half 72 and sealingly engages a housing 90 secured to the sleeve shaft 74. A compression spring 92 is disposed in the pressure chamber 84, and is operatively connected between the axially movable pulley half 72 and the stationary wall member 82. The spring 92, assisted by fluid pressure within the chamber 84, urges the pulley half 72 leftwardly towards the maximum underdrive ratio shown.

The input shaft 18 is also drivingly connected to a positive-displacement pump, generally designated 94. The pump 94 may be of any of the well-known designs for transmission control pumps, and is preferably of the variable-displacement type, such that maximum efficiency can be obtained. As is well-known, such fluid pumps provide positive fluid pressure for transmission control systems, wherein the fluid pressure can be controlled to be proportional to engine torque and engine speed or vehicle speed.

The pump 94 is connected to a pressure control system of conventional design, not shown, which in turn directs system pressure to a passage 96 and a passage 98. The control system, in conventional fashion, is effective to provide a system pressure proportional to the vehicle or engine operating parameters. The passage 98 is connected between the stationary wall 82 und the housing 90 to the chamber 84. The passage 96 is in fluid communication with a valve mechanism, generally designated 100.

The valve mechanism 100 includes a valve spool 102 having a pair of equal-diameter lands 104 and 106 slidably disposed in a valve bore 108. The valve spool 102 is urged to the right by a spring member 110 into abutment with an actuator rod 112, which rod is reciprocable on an axis that is parallel to the input axis 14 representing the axis of rotation of the drive pulley 64. In the position shown the valve land 106 registers with a fluid port 114 connected to a passage 116, which in turn is connected to the passage 62. As previously mentioned, the passage 62 is in fluid communication with the pressure chambers, 58 and 60. The space containing the spring member 110, and therefore the left-hand side of the land 106, is connected to an exhaust port 118, and the space between the valve lands 106 and 104 is in fluid communication with the system pressure in the passage 96. The valve land 106 is designed to provide either line-to-line sealing of the port 114 or slight underlapping of the port: it is preferable that slight underlapping be achieved.

With this structure, the pressure in the port 114 and therefore in the passages 116 and 62 is less than system pressure when the valve spool 102 is in the position shown. If the valve spool 102 is moved to the left, the pressure in the port 114 will be equal to system pressure, whereas if the valve spool 102 is moved to the right the pressure in the port 114 will be equal to exhaust pressure. Thus the pressure in the chambers 58 and 60 can be controlled between full system pressure and exhaust pressure by the movement of the valve spool 102. The pressure within the pressure chamber 84 of the pulley 68, however, is always maintained equal to system pressure, and thus establishes a primary tension force in the drive belt 66. If the force on the pulley half 30 is greater than the force on the pulley half 72, the pulley half 30 will move to the right towards the phantom position shown at 120, which is the maximum overdrive position for the variable-ratio drive mechanism 12. Rotary movement of the pulley half 30 is transmitted by the drive belt 66 to the pulley half 72. If the force on the pulley half 72 is greater than the force on the pulley half 30, the pulley half 72 will move towards the position shown, and the drive belt 66 will cause the pulley half 30 to respond to such movement by movement leftwardly. Since the maximum pressure available is equal to system pressure, the pressure chambers operable on the pulley half 30 must be greater in area than the pressure chamber operable on the pulley half 72. In order to conserve maximum envelope size, the pulley half 30 utilizes a double-chamber arrangement such that the wall of the pulley half 30 is effectively a pressure piston. However, a single-area chamber could be utilised if the space were available.

The actuator rod 112 is slidably disposed in apertures 122 and 124 formed in the housing 26 and a block 125 respectively. A shoulder 126 is formed on the actuator rod 112, and a spring member 128 is compressed between the shoulder 126 and the housing 24. This spring member 128 biases the actuator rod 112 to the left, and has a force stored therein which is greater than the force in the spring member 110.

The actuator rod 112 has secured thereto a pin 130 which forms a pivot for a control lever 132. The drive belt 66 interconnecting the drive and driven pulleys 64 and 68 encompasses a space which is between the pulleys under all conditions, and the control lever 132 is located in this space, substantially on a line intersecting the input and output axes of rotation 14 and 16 of the pulleys. The lever 132 has one end 134 in abutment with a conical surface 136 of the pulley half 30, and its other end 138 in abutment with a control rod 140 which is the output member for a control mechanism 142.

The pin 130 engages the opposite side of the lever 132 from the side which is in abutment with the pulley half 30 and with the control rod 140. The control mechanism 142 is a conventional linear actuator, such as a stepper motor or a variable force solenoid, which includes an output member that moves linearly in response to an input control signal. The control mechanism 142 could alternatively comprise a mechanical device effective to produce a linear actuator output.

In known manner, the control signal may be proportional to any of the various or engine operating parameters such as engine torque, operator demand, vehicle speed and engine speed.

As mentioned above, the variable drive ratio pulley mechanism 12 is shown in the maximum underdrive ratio. That is, speed is reduced as drive torque is transmitted from the pulley 64 to the pulley 68 by means of the drive belt 66, and torque is increased. If the operating conditions of the vehicle are such that the drive ratio should be changed to provide a higher output speed relative to input speed, the control rod 140 will move leftwardly towards the phantom position 144 shown for the lever 132. The spring member 128, which has a higher force stored therein than the spring member 110, will thereby move the actuator rod 112, and consequently the valve spool 102, leftwardly such that system pressure is directed through the passage 114, the passage 116 and the passage 62 to the pressure chambers 58 and 60. This pressure in the chambers 58 and 60 will result in rightward movement of the piston member 48 and the pulley half 30, such that the drive belt 66 will move outwardly on the conical surfaces of the drive pulley 64, thereby forcing the drive belt 66 inwardly on the conical surfaces of the driven pulley 68. This rightward movement of the pulley half 30 will continue until the end 134 of the lever 132 is pivoted sufficiently for the actuator rod 112 to be moved to the neutral position such that the valve spool 102 is returned to the neutral position shown. Any drive ratio determined by the position of the lever between the solid and phantom positions can be maintained. Pivotal movement of the lever 132 about its other end 138 retracts the actuator rod 112 from the valve spool 102 such that the spring 110 is able to position the valve spool 102 in the neutral position.

If the drive mechanism 12 is in a drive ratio other than maximum underdrive, such as the maximum overdrive position as shown in phantom, and the control mechanism 142 is conditioned to establish a lower drive ratio, the control rod 140 will be moved to the right, towards the lever position shown in solid lines, such that the lever 132 will pivot about its end 134 to the position 146 shown in phantom. This pivoting of the lever 132 will result in movement of the actuator rod 112 to the right, such that the spring member 110 will be able to move the valve spool 102 to the right. Such movement of the valve spool will provide an exhaust connection for the passage 114 such that the fluid pressure in the chambers 58 and 60 will be connected to exhaust. When this occurs, the fluid pressure in the chamber 84, and the bias of the spring 92, will be effective to move the drive belt 66 from the position 148 shown in phantom towards the solid-line position, resulting in leftward movement of the pulley half 30. The leftward movement of the pulley half 30 will result in pivotal movement of the lever 132 about its other end 138 such that the spring member 128 will then move the actuator rod 112 to the left. This leftward movement will continue until the valve spool 102 has returned to the neutral position and sufficient pressure is generated in the chambers 58 and 60 to produce the force on the pulley half 30 required to maintain the desired ratio.

It will be evident from the above that the drive ratio between the pulleys 64 and 68 can be controlled infinitessimally within the drive range permitted, between the maximum underside position and the maximum overdrive position.

## Claims

1. A variable-ratio drive mechanism comprising a pair of sheaves (64 and 68) each having a pair of facing belt-receiving discs (28, 30 and 70, 72) at least one of which is axially movable to vary the drive belt (66) bending radius, and at least one disc (30) on one sheave (64) being axially movable by fluid pressure application thereto, a control lever (132) supported outboard said one sheave (64) for pivoting movement on axes normal to the plane of the rotary axes (14 and 16) of said sheaves (64 and 68) and having one end (134) in slidable engagement with said one disc (30), a control actuator (142) located outboard said one sheave (64) and in engagement with the control lever (132) at a first pivoting axis, in a sense to cause the said one end (134) to bear against said one disc (30) at a second pivoting axis, the control actuator (142) being movable independently of the movement of said one disc so that the control lever (132) is pivoted at the second axis on movement of the control actuator and at the first axis on movement of said one disc in accordance with the independent movement of said one disc and the control actuator, and a fluid control valve (100) operatively connected to the control lever (132) at a point outboard of said one disc (30) and spaced from the point of engagement between the control lever and the control actuator (142), the fluid control valve (100) being operated in response to the pivoting movement of the control lever (132) for controlling fluid pressure to said one sheave (64) to cause said one disc (30) to follow movement of the control actuator (142), the drive belt (66) riding on the two sheaves (64 and 68) encompassing a space which is between the sheaves (64 and 68) under all conditions, characterised in that the control lever (132) is located in said space.

2. A variable-ratio drive mechanism according to claim 1, characterised in that the control lever (132) is substantially on a line intersecting the rotary axes (14 and 16) of the sheaves (64 and 68).

3. A variable-ratio drive mechanism according to claim 1 or 2, characterised in that the fluid control valve (100) is connected to the control lever (132) intermediate the said one end (134) and the control actuator (142).

4. A variable-ratio drive mechanism according to claim 3, characterised in that the fluid control valve (100) is connected to the control lever (132) by elements (112 and 130) engaging one side of the lever, and biased (128) against the lever, and that said one disc (30) and the control actuator (142) engage the other side of the lever.

5. A variable-ratio drive mechanism according to any one of claims 1 to 4, characterised in that the control actuator (142) is a reciprocable actuator movable on an axis parallel to the rotary axis (14) of said one disc (30).

**Patentansprüche**

1. Antriebsmechanismus mit veränderbarer Übersetzung mit einem Paar Scheibenanordnungen (64, 68), die jeweils ein Paar einander zugewendeter Riemenaufnahmescheiben (28, 30 und 70, 72) besitzen, von denen mindestens eine in Axialrichtung bewegbar ist, um den Biegeradius des Antriebsriemens (66) zu verändern, und mindestens eine Scheibe (30) bei einer Scheibenanordnung (64) durch darauf einwirkenden Fluiddruck axial bewegbar ist, wobei ein Steuerhebel (132) außerhalb der einen Scheibenanordnung (64) abgestützt ist zur Schwenkbewegung um senkrecht zur Ebene der Drehachsen (14 und 16) der Scheibenanordnungen (64 und 68) liegende Achsen und mit einem Ende (134) in Gleitanlage an der einen Scheibe (30), ein Steuerstellglied (142) außerhalb der einen Scheibenanordnung (64) angeordnet und in Eingriff mit dem Steuerhebel (132) an einer ersten Schwenkachse ist in einem solchen Sinn, daß das eine Ende (134) zum Abstützen gegen die eine Scheibe (30) an einer zweiten Schwenkachse veranlaßt wird, das Steuerstellglied (142) unabhängig von der Bewegung der einen Scheibe begwegbar ist, so daß der Steuerhebel (132) auf eine Bewegung des Steuerstellgliedes an der zweiten Achse geschwenkt wird und auf eine Bewegung der einen Scheibe an der ersten Achse entsprechend der unabhängigen Bewegung der einen Scheibe und des Steuerstellgliedes, und ein Fluid-Steuerventil (100) wirksam mit dem Steuerhebel (132) an einer Stelle außerhalb der einen Scheibe (30) und mit Abstand von der Eingriffsstelle zwischen dem Steuerhebel und dem Steuerstellglied (142) verbunden ist, das Fluid-Steuerventil (100) in Abhängigkeit von der Schwenkbewegung des Steuerhebels (132) zum Steuern des Fluiddruckes auf die eine Scheibenanordnung (64) betätigt ist, um die eine Scheibe (30) zum Folgen der Bewegung des Steuerstellgliedes (142) zu veranlassen, der Antriebsriemen (66) auf den beiden Scheibenanordnungen (64 und 68) aufsitzt und unter allen Umständen einen Raum umschließt, der sich zwischen den Scheibenanordnungen (64 und 68) befindet, dadurch gekennzeichnet, daß der Steuerhebel (132) in diesem Raum angeordnet ist.

2. Antriebsmechanismus mit veränderbarer Übersetzung nach Anspruch 1, dadurch gekennzeichnet, daß der Steuerhebel (132) sich im wesentlichen an einer Linie befindet, die die Drehachsen (14 und 16) der Scheibenanordnungen (64 und 68) schneidet.

3. Antriebsmechanismus mit veränderbarer Übersetzung nach Anspruch 1 oder 2, dadurch gekennzeichnet, daß das Fluid-Steuerventil (100) mit dem Steuerhebel (132) zwischen dem einen Ende (134) und dem Steuerstellglied (142) verbunden ist.

4. Antriebsmechanismus mit veränderbarer Übersetzung nach Anspruch 3, dadurch gekennzeichnet, daß das Fluid-Steuerventil (100) mit dem Steuerhebel (132) durch an einer Seite des Hebels angreifende Elemente (112 und 130), die gegen den Hebel vorgespannt (128) sind, verbunden ist, und daß die eine Scheibe (30) und das Steuer-Stellglied (172) an der anderen Seite des Hebels angreifen.

5. Antriebsmechanismus mit veränderbarer Übersetzung nach einem der Ansprüche 1 bis 4, dadurch gekennzeichnet, daß das Steuer-Stellglied (142) ein hin— und herbewegbares, an einer zur Drehachse (14) der einen Scheibe (30) parallelen Achse bewegbares Stellglied ist.

**Revendications**

1. Un mécanisme de transmission à rapport variable comportant deux poulies (64 et 68) ayant chacune deux disques récepteurs de courroie (28, 30 et 70, 72), disposés face à face, dont au moins l'un est mobile dans la direction axiale pour faire varier le rayon de courbure de la courroie de transmission (65), et au moins un premier disque (30) d'une première poulie (64) pouvant être déplacé axialement par l'application d'une pression de fluide sur lui, un levier de commande (132) supporté à l'extérieur de la première poulie (64) de façon à pivoter sur des axes perpendiculaires au plan des axes de rotation (14 et 16) des poulies (64 et 68) et ayant une extrémité (134) en appui glissant sur le premier disque (30), un dispositif de commande (142) placé à l'extérieur de la première poulie (64) et en prise avec le levier de commande (132), au niveau d'un premier axe de pivotement, dans un sens pour faire porter cette première extrémité (134) contre le premier disque (30) au niveau d'un deuxième axe de pivotement, le dispositif de commande (142) pouvant être déplacé indépendamment du mouvement de ce premier disque de telle sorte que le levier de commande (132) est basculé sur le deuxième axe lors du mouvement du dispositif de commande et sur le premier axe lors du mouvement du premier disque, conformément au mouvement indépendant de ce premier disque et du dispositif de commande, et une vanne de commande de fluide (100) reliée fonctionnellement au levier de commande (132) en un point situé à l'extérieur du premier disque (30) et espacé du point d'appui entre le levier de commande et le dispositif de commande (142), la vanne de commande du fluide (100), étant actionnée en réponse au mouvement de pivotement du levier de commande (132) pour commander la pression de fluide envoyée à la première poulie (64) de façon à obliger le premier disque (30) à suivre le mouvement du dispositif de commande (142), la courroie de transmission (66) qui passe sur les deux poulies (64 et 66) entourant un espace qui se trouve les poulies (64 et 68) dans toutes les positions, caractérisé en ce que le levier de commande (132) est placé dans cet espace.

2. Un mécanisme de transmission à rapport variable selon la revendication 1, caractérisé en ce que le levier de commande (132) est sensiblement sur une ligne qui coupe les axes de rotation (14 et 16) des poulies (64 et 68).

3. Un mécanisme de transmission à rapport variable selon la revendication 1 ou 2, caractérisé en ce que la vanne de commande du fluide (100) est reliée au levier de commande (132) en un point intermédiaire entre la première extrémité (134) et le dispositif de commande (142).

4. Un mécanisme de transmission à rapport variable selon la revendication 3, caractérisé en ce que la vanne de commande du fluide (100) est reliée au levier de commande (132) par des organes (112 et 130) qui attaquent un côté du levier et sont repoussés (128) contre le levier, et en ce que le premier disque (30) et le dispositif de commande (142) attaquent l'autre face du levier.

5. Un mécanisme de transmission à rapport variable selon l'une des revendications 1 à 4, caractérisé en ce que le dispositif de commande (142) est un dispositif à mouvement alternatif qui peut se déplacer sur un axe parallèle à l'axe de rotation (14) du premier disque (30).